# FASCICULE DE BREVET EUROPEEN

(11) **EP 3 797 870 B1**
(45) Date de publication et mention de la délivrance du brevet: **18.09.2024**
(21) Numéro de dépôt: 20197980.4
(22) Date de dépôt: 24.09.2020
(51) Int. Cl.: B03C 7/00, B03C 7/10, B01J 8/18, H02N 1/04

(54) **DISPOSITIF DE CHARGE ÉLECTROSTATIQUE D'UN MÉLANGE DE GRANULES, PROCÉDÉ ET UTILISATION ASSOCIÉS**
VORRICHTUNG ZUR ELEKTROSTATISCHEN AUFLADUNG EINER GRANULATKÖRNCHEN-MISCHUNG, ENTSPRECHENDES VERFAHREN UND ENTSPRECHENDER EINSATZ
DEVICE FOR ELECTROSTATIC CHARGE OF A MIXTURE OF GRANULES, ASSOCIATED METHOD AND USE

(30) Priorité: 26.09.2019 FR 1910626
(43) Date de publication de la demande: 31.03.2021
(73) Titulaire: SKYTECH, 27940 Le Val d'Hazey (FR)
(72) Inventeur: SOMMEN, Pierre, 27120 PACY-SUR-EURE (FR)
(74) Mandataire: Lavoix

(56) Documents cités:
- WO-A1-2015/097290
- WO-A1-2019/171011
- WO-A1-98/45657
- US-A- 5 885 330
- IUGA A ET AL: "Tribocharging of plastics granulates in a fluidized bed device", JOURNAL OF ELECTROSTATICS, ELSEVIER SCIENCE PUBLISHERS B.V. AMSTERDAM, NL, vol. 63, no. 6-10, 1 June 2005 (2005-06-01), pages 937 - 942, XP027652818, ISSN: 0304-3886, [retrieved on 20050601]

## Description

La présente invention concerne un dispositif de charge électrostatique d'un mélange de granules de matériaux différents. L'invention concerne également un procédé de charge mettant en oeuvre le dispositif précédent, ainsi qu'une utilisation du dispositif pour charger un mélange.

Des dispositifs de séparation électrostatique sont déjà utilisés pour trier des matériaux granulaires mélangés provenant, par exemple, du broyage des déchets industriels. Généralement, la majeure partie des matériaux à séparer est constituée de matériaux isolants électriquement, et notamment de matériaux plastiques.

Par exemple, le recyclage de déchets électriques et/ou électroniques implique de séparer les différents composants avant de valoriser les matériaux obtenus. Il est souhaitable qu'une telle séparation soit la plus efficace possible pour obtenir une qualité sensiblement constante des matériaux recyclés.

Lorsque les matériaux à séparer présentent des densités égales ou très proches, les procédés de séparation basés sur la gravité sont trop imprécis et ne permettent pas d'obtenir des séparations satisfaisantes.

Pour cela, il est connu une technique consistant à broyer les matériaux isolants pour en faire des granules et de les séparer par effet électrostatique.

Dans une première étape, les granules sont chargés par effet triboélectrique dans un dispositif de chargement.

Pour charger des particules par tribo-électricité, il est connu d'utiliser des procédés d'agitation, faisant entrer en collision des granules d'un mélange à séparer. Ceci permet aux particules d'un premier matériau de se charger négativement et aux particules d'un deuxième matériau de se charger positivement, permettant leur séparation.

Dans une deuxième étape, les granules chargés sont convoyés vers un dispositif de tri électrostatique dans lequel ils sont séparés par un champ électrique.

La qualité de la séparation des granules dépend du rapport entre la force appliquée par le champ électrique et celle résultant de la gravité. Ainsi, il est souhaitable de maximiser la charge appliquée aux granules avant leur introduction dans le dispositif de séparation, afin d'augmenter l'effet de déviation du champ électrique.

Un type de dispositif de chargement connu est celui des dispositifs triboélectriques utilisant l'air comme moyen d'agitation, notamment les dispositifs à lit fluidisé.

L'utilisation d'un flux d'air comme moyen d'agitation est avantageuse car elle permet de sécher et chauffer légèrement les granules par le flux d'air en plus de les agiter. Le chargement par effet triboélectrique est en effet plus efficace avec un taux d'humidité faible et une température élevée.

Un tel dispositif de chargement utilisant l'air comme moyen d'agitation, également appelé dispositifs sur lit fluidisé, est décrit par le document JP 10024252 et par le document IUGA A. et al. « Tribocharging of plastic granulates in a fluidized bed device » Journal of Electrostatics, vol. 63, no. 6-10, 1er juin 2005, pages 937-942.

Ce dispositif ne donne pas entière satisfaction. En effet, il ne permet que le chargement de lots de granules, et non le chargement d'un flux constant de granules, qui est plus intéressant pour une exploitation industrielle.

De plus, il a été démontré que le temps de séjour des granules dans le dispositif de chargement est un paramètre important pour maximiser les charges surfaciques générées sur les granules.

Notamment, une valeur maximale de charge des granules est atteinte au-delà d'une certaine durée de séjour dépendant du dispositif et des matériaux des granules. Cette durée de chargement maximal est a priori supérieure à 2 minutes, voire peut atteindre au moins dix minutes dans certains cas.

Les durées de séjour des granules dans les dispositifs connus de l'état de la technique sont généralement de l'ordre de 30 secondes, c'est-à-dire bien en dessous des valeurs optimales précitées.

Il existe donc un besoin pour un dispositif de chargement par triboélectricité d'un mélange de granules sur lit fluidisé, permettant le chargement d'un flux continu de granules avec un temps de séjour augmenté, sans augmenter sensiblement l'encombrement associé au dispositif.

A cet effet, l'invention a pour objet un dispositif de charge par triboélectricité d'un mélange de granules de matériaux différents, le dispositif comprenant :
- une chambre de chargement comprenant des parois délimitant un espace interne, les parois définissant une entrée des granules et une sortie des granules, l'entrée des granules et la sortie des granules étant à l'écart l'une de l'autre par rapport à une direction d'élévation,
- un dispositif de soufflage adapté pour générer dans l'espace interne un flux d'air adapté pour permettre aux granules dans la chambre de former un lit fluidisé, et
- une pluralité de grilles disposées dans la chambre, les grilles étant adaptées pour bloquer le passage des granules, les grilles formant un ensemble de chicanes dans l'espace interne entre l'entrée des granules et la sortie des granules.

Selon des modes de réalisation particuliers, le dispositif de charge comprend une ou plusieurs des caractéristiques suivantes, prise(s) isolément ou selon tout combinaison techniquement réalisable :
- chaque grille s'étend dans un plan d'étendue et présente une forme rectangulaire ;
- le plan d'étendue de chaque grille forme avec la direction d'élévation un angle d'inclinaison, une valeur de l'angle d'inclinaison étant comprise entre - 20° et 20° ;
- la valeur de l'angle d'inclinaison de chaque grille est opposée à la valeur de l'angle d'inclinaison de chaque grille voisine ;
- au moins un revêtement des parois de la chambre est réalisé avec un matériau de revêtement, le matériau de revêtement étant adapté pour charger au moins deux des matériaux des granules par effet triboélectrique ;
- chaque grille définit un passage dans l'espace interne, chaque passage étant adapté pour permettre le passage des granules, chaque passage s'ouvrant au voisinage d'un bord latéral de la chambre, et
- chaque grille s'étend en travers d'une totalité de l'espace interne, la chambre comprenant des conduits traversant des parois, chaque conduit étant adapté pour permettre aux granules de contourner une des grilles.

L'invention a également pour objet un procédé de chargement par triboélectricité d'un mélange de granules de matériaux différents, le procédé mettant en oeuvre un dispositif de charge d'un mélange de granules de matériaux différents, le dispositif comprenant :
- une chambre de chargement comprenant des parois délimitant un espace interne, les parois définissant une entrée des granules et une sortie des granules, l'entrée des granules et la sortie des granules étant à l'écart l'une de l'autre relativement à une direction d'élévation,
- un dispositif de soufflage adapté pour générer dans l'espace interne un flux d'air s'écoulant selon la direction d'élévation, le flux d'air étant adapté pour permettre aux granules dans la chambre de former un lit fluidisé, et
- une pluralité de grilles disposées dans la chambre, les grilles étant adaptées pour bloquer le passage des granules, les grilles formant un ensemble de chicanes dans l'espace interne entre l'entrée des granules et la sortie des granules,
le procédé comprenant des étapes suivantes :
- génération du flux d'air dans l'espace interne par le dispositif de soufflage,
- insertion des granules dans la chambre à travers l'entrée des granules,
- parcours de la chambre par les granules, pour obtenir des granules chargés, et
- extraction des granules chargés hors de la chambre à travers la sortie des granules.

Selon un mode de réalisation particulier, le procédé selon l'invention comprend la caractéristique suivante :
- lors de l'étape de parcours, un temps de séjour moyen des granules dans la chambre est supérieur ou égal à trente secondes, notamment supérieur ou égal à une minute, avantageusement supérieur ou égal à deux minutes.

L'invention a en outre pour objet une utilisation d'un dispositif de charge par triboélectricité d'un mélange de granules de matériaux différents pour charger les granules, afin de séparer de granules en fonction des matériaux des granules,
le dispositif comprenant :
   - une chambre de chargement comprenant des parois délimitant un espace interne, les parois définissant une entrée des granules et une sortie des granules, l'entrée des granules et la sortie des granules étant à l'écart l'une de l'autre relativement à une direction d'élévation,
   - un dispositif de soufflage adapté pour générer dans l'espace interne un flux d'air s'écoulant selon la direction d'élévation, le flux d'air étant adapté pour permettre aux granules dans la chambre de former un lit fluidisé, et
   - une pluralité de grilles disposées dans la chambre, les grilles étant adaptées pour bloquer le passage des granules, les grilles formant un ensemble de chicanes dans l'espace interne entre l'entrée des granules et la sortie des granules,
les matériaux des granules étant choisis dans le groupe constitué du polypropylène, du polystyrène, du polyamide, de l'acrylonitrile butadiène styrène et du polyéthylène.

L'invention sera mieux comprise à la lecture de la description qui suit, donnée uniquement à titre d'exemple et faite en référence aux dessins annexés, parmi lesquels :
- la figure 1 est une vue en coupe d'un premier exemple de dispositif de chargement ;
- la figure 2 est une vue en coupe du dispositif de la figure 1 pendant la mise en oeuvre d'un procédé de chargement d'un mélange de granules, et
- la figure 3 est une vue en coupe d'un deuxième exemple de dispositif de chargement.

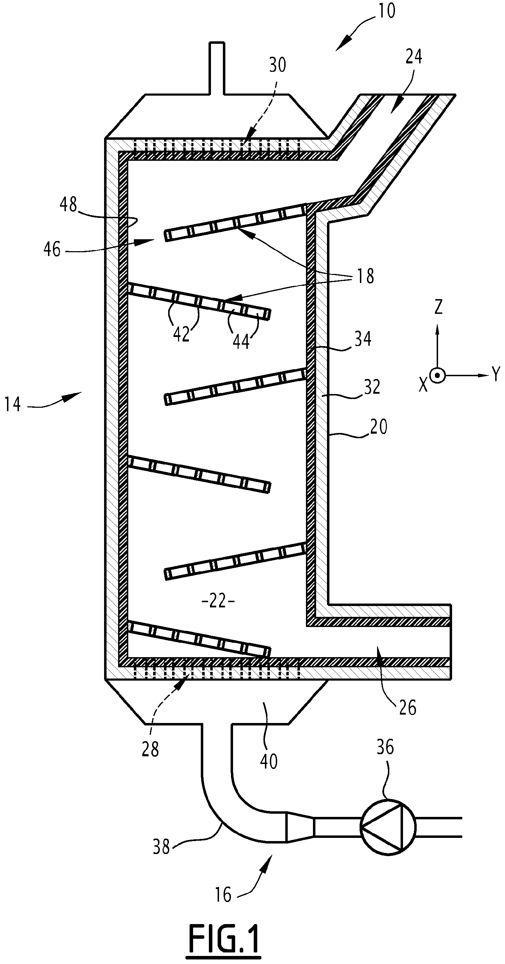

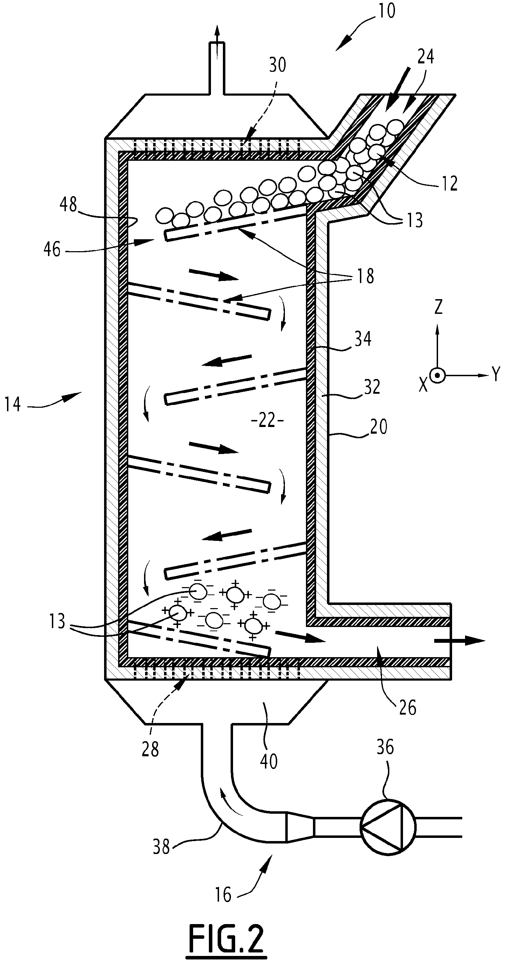

Un dispositif 10 de chargement est représenté sur les figures 1 et 2.

Le dispositif 10 est adapté pour charger un mélange 12 de granules 13 par effet triboélectrique.

Par le terme « granule », il est entendu une particule présentant une forme sensiblement compacte, composée d'au moins un matériau. Un granule présente des dimensions caractéristiques millimétriques. Par exemple, chaque granule 13 présente des dimensions, mesurées selon chacune des directions, comprises entre 1 millimètre et 20 millimètres.

Le mélange 12 comprend notamment des granules 13 de formes variées et de dimensions variées, par exemple selon une distribution normale de taille dont un centre est situé dans la plage de valeurs de dimensions précédemment mentionnée.

Par l'expression « des granules d'au moins deux matériaux différents », il est entendu que le mélange 12 comprend, par exemple, au moins une première population de granules 13 comprenant majoritairement un premier matériau et une deuxième population de granules 13 comprenant majoritairement un deuxième matériau, le deuxième matériau étant distinct du premier matériau.

Par l'expression « majoritairement », il est entendu que chaque granule 13 de la première population comprend par exemple au moins 90% en masse du premier matériau ou que chaque granule 13 de la deuxième population comprend au moins 90% en masse du deuxième matériau.

Suivant l'exemple proposé, le premier matériau et le deuxième matériau sont des matériaux isolants électriquement, notamment des matériaux plastiques.

Par exemple, le premier matériau et le deuxième matériau sont choisis dans le groupe constitué du polypropylène, du polystyrène, du polyamide, de l'acrylonitrile butadiène styrène et du polyéthylène.

Le mélange 12 de granules 13 est, par exemple, obtenu par broyage, en particulier de déchets, plus spécifiquement de déchets industriels, issus d'équipement électriques et/ou électroniques ou de véhicule hors d'usage.

Par l'expression « charger les granules », il est entendu que le dispositif 10 de chargement est adapté pour générer des charges électriques de surface sur une surface externe d'au moins une partie des granules 13, grâce au phénomène de triboélectricité.

La triboélectricité est un phénomène survenant lors de frottements de surfaces de deux matériaux isolants différents, au cours desquels des transferts d'électrons ont lieu d'une des surfaces vers l'autre, ce qui entraîne l'apparition de charges de surfaces de signes opposés sur les deux surfaces.

Le dispositif 10 est décrit en référence à une direction d'élévation Z, orientée selon la gravité, ainsi qu'une direction longitudinale X et une direction transversale Y perpendiculaires entre elles et à la direction d'élévation Z.

Par les termes « au-dessus » et « en dessous », il est entendu qu'un objet est situé plus haut qu'un autre, respectivement plus bas, relativement à la direction d'élévation Z.

Le dispositif 10 comprend une chambre 14 de chargement, un dispositif de soufflage 16 et une pluralité de grilles 18.

Selon l'exemple présenté, le dispositif 10 de chargement comprend huit grilles 18.

Plus généralement, le dispositif 10 comprend au moins quatre grilles 18, notamment au moins douze grilles 18.

La présence d'un nombre plus important de grilles dans la chambre permet d'augmenter encore le temps de séjour des granules 13 dans le dispositif de chargement 10, sans modifier son encombrement au sol.

La chambre 14 de chargement est un compartiment adapté pour contenir et isoler le mélange 12 pendant le chargement des granules 13.

Notamment, la chambre 14 est adaptée pour protéger le mélange 12 de granules 13 des variations de température, de pression, d'humidité et de champ électrique à l'extérieur de la chambre 14, au cours du chargement.

La chambre 14 de chargement comprend des parois 20, qui délimitent un espace interne 22 et définissent une entrée des granules 24 et une sortie des granules 26 ainsi qu'une entrée d'air 28 et une sortie d'air 30.

La chambre 14 de chargement présente une forme parallélépipédique, allongée selon la direction d'élévation Z.

La chambre 14 présente une longueur, mesurée selon la direction longitudinale X, une largeur mesurée selon la direction transversale Y, et une hauteur mesurée selon la direction d'élévation Z.

La longueur et la largeur de la chambre 14 sont, par exemple, comprises entre 40 centimètres et 60 centimètres.

La hauteur de la chambre 14 est, par exemple, comprise entre 80 centimètres et 120 centimètres.

L'aire d'une section horizontale, dans un plan XY orthogonal à la direction d'élévation Z, de la chambre 14 est représentative d'un encombrement au sol du dispositif 10.

L'aire de la section de la chambre 14 dans le plan horizontal est avantageusement inférieure à 4000 centimètres carrés.

Cela permet au dispositif 10 de présenter un encombrement au sol faible.

Les parois 20 sont un ensemble de plaques formant une enceinte.

Les parois 20 sont réalisées, par exemple, en un matériau métallique.

Les parois 20 comprennent, dans l'exemple représenté, une structure 32 et un revêtement 34.

La structure 32 des parois 20 est, par exemple, réalisée avec le matériau métallique.

Le revêtement 34 est une couche recouvrant la structure 32 des parois 20.

Le revêtement 34 s'étend en regard de l'espace interne 22.

Le revêtement 34 est réalisé, dans l'exemple représenté, en un matériau de revêtement.

Le matériau de revêtement est un matériau plastique isolant, adapté pour charger au moins deux des matériaux des granules 13 par effet triboélectrique.

L'utilisation d'un matériau de revêtement sur une surface interne des parois de la chambre permet de générer des charges par triboélectricité lors des collisions entre les granules 13 et les parois 20.

Cela est notamment possible lorsque les matériaux composant les granules 13 permettent de choisir un matériau de revêtement apte à charger les granules 13 avec des charges de surface de signes différents.

L'entrée des granules 24 est une ouverture dans les parois 20 de la chambre 14, située au-dessus des grilles 18.

L'entrée des granules 24 permet l'insertion des granules 13 dans l'espace interne 22.

La sortie des granules 26 est une ouverture dans les parois 20 de la chambre 14, située en-dessous des grilles 18.

La sortie des granules 26 permet l'extraction des granules 13 depuis l'espace interne 22.

La sortie des granules 26 est, par exemple, adaptée pour être reliée à un dispositif de séparation électrostatique (non représenté).

L'entrée des granules 24 et la sortie des granules 26 sont à l'écart l'une de l'autre selon la direction d'élévation Z.

L'entrée d'air 28 est une ouverture de distribution d'un flux d'air dans l'espace interne 22 de la chambre 14.

L'entrée d'air 28 est avantageusement grillagée, de manière à prévenir le passage de granules 13 à travers l'entrée d'air 28.

La sortie d'air 30 est une ouverture adaptée pour permettre l'évacuation du flux d'air hors de la chambre 14, de manière à éviter une surpression.

La sortie d'air 30 est avantageusement grillagée, de manière à prévenir le passage de granules 13.

Le dispositif de soufflage 16 comprend une soufflante 36, un conduit d'arrivée d'air 38 et un diviseur d'air 40.

Le dispositif de soufflage 16 est adapté pour générer dans la chambre 14 un flux d'air s'écoulant selon la direction d'élévation Z.

Le flux d'air est adapté pour permettre aux granules 13 dans la chambre 14 de former un lit fluidisé.

Par le terme « lit fluidisé », il est entendu un état d'un matériau granulaire lui conférant des propriété d'écoulement généralement associées aux liquides et aux gaz, sous l'effet d'une agitation externe.

Cette agitation est provoquée en injectant un fluide pressurisé, ici de l'air, en dessous du milieu granulaire, ici le mélange 12 de granules 13. La pression exercée par le flux d'air contrebalance en partie l'action de la gravité sur les granules 13.

Les granules 13 sont alors animés de mouvements chaotiques et s'entrechoquent fréquemment, favorisant le chargement par triboélectricité.

De plus, cet état permet l'écoulement des granules 13 dans la chambre 14.

La soufflante 36 est un propulseur adapté pour mettre en mouvement un gaz, notamment de l'air dans l'exemple présenté.

La soufflante 36 comprend, par exemple, une hélice mise en mouvement par un moteur thermique ou électrique.

Le conduit d'arrivée d'air 38 est un tube de guidage de l'air mis en mouvement par la soufflante 36.

Le conduit d'arrivée d'air 38 est adapté pour guider l'air depuis la soufflante 36 jusqu'au diviseur d'air 40.

Le diviseur d'air 40 est un dispositif fluidique de répartition d'un flux d'air entrant pour former un flux d'air homogène sur une surface de sortie prédéterminée.

Le diviseur d'air 40 est adapté pour répartir l'air circulant dans le conduit d'arrivée d'air 38 pour former un flux d'air présentant une intensité homogène sur toute la section de l'espace interne 22.

Le diviseur d'air 40 comprend, par exemple, une pluralité de tuyaux.

Les tuyaux débouchent dans le conduit d'arrivée d'air 38 à une première extrémité et à l'entrée d'air 28 à une deuxième extrémité.

Les deuxièmes extrémités des tuyaux sont réparties sur toute l'étendue de l'entrée d'air 28, de manière à former un flux d'air homogène sur toute la section de l'espace interne 22.

Par exemple, les deuxièmes extrémités des tuyaux sont alignées selon les directions longitudinale X et transversale Y, séparées par des intervalles réguliers, sur toute la longueur et toute la largeur de l'entrée d'air 28.

Cela permet d'obtenir un flux d'air présentant un débit sensiblement constant sur toute la section de la chambre 14.

Les grilles 18 sont, par exemple, des plaques percées de trous.

Chaque grille 18 comprend une pluralité de régions solides 42 et de régions libres 44 alternées sur une étendue de la grille 18.

Les régions libres 44 sont les trous dans la plaque et les régions solides 42 sont des parties non-percées de la plaque.

Les régions libres 44 présentent des dimensions transverses inférieures aux dimensions des granules 13.

Par « dimension transverse », il est entendu un diamètre des trous.

Chaque grille 18 est ainsi adaptée pour bloquer le passage des granules 13 et pour permettre le passage du flux d'air.

Chaque grille 18 présente une forme rectangulaire plane et s'étend dans l'espace interne 22 dans un plan d'étendue, en travers d'au moins une partie du flux d'air.

Par « en travers d'au moins une partie du flux d'air », on entent que chaque grille 18 s'étend dans une partie de l'espace interne 22 dans laquelle le flux d'air est destiné à s'écouler, et que le plan d'étendue de la grille 18 s'étend transversalement à la direction d'écoulement du flux d'air.

Le plan d'étendue de chaque grille 18 forme un angle d'inclinaison avec la direction d'élévation Z.

Une valeur de l'angle d'inclinaison est, par exemple, comprise entre 0° et 20°.

La variation de la valeur de l'angle entre les grilles et la direction d'élévation Z permet d'ajuster la vitesse de parcours de la chambre par les granules 13.

Chaque grille 18 définit un passage 46 dans l'espace interne 22.

Les grilles 18 sont, par exemple réalisées en un matériau rigide.

Le matériau rigide est choisi de sorte que les grilles 18 ne soient pas déformées par le flux d'air ou le passage des granules 13.

Avantageusement le matériau rigide est adapté pour charger au moins un des matériaux des granules 13 par effet triboélectrique.

Par exemple, le matériau rigide est le polypropylène ou le polystyrène.

Cela est particulièrement adapté pour charger un mélange 12 de granules 13 comprenant du polypropylène et/ou du polystyrène.

Selon un mode de réalisation, le matériau rigide est un matériau composite comprenant au moins deux matériaux choisis parmi les matériaux composant les granules 13 du mélange 12.

Cela permet au matériau rigide des grilles 18 de charger des granules 13 composés de chacun des matériaux du mélange 13.

Selon un mode de réalisation, les grilles 18 sont des assemblages de barreaux.

Dans ce cas, les régions solides 42 sont les barreaux et les régions libres 44 sont des intervalles séparant les barreaux.

Les dimensions transverses des régions libres 44 sont alors les distances séparant deux barreaux voisins.

Les passages 46 sont des ouvertures dans les grilles 18.

Les passages 46 présentant des dimensions transverses supérieures aux dimensions des granules 13.

Ainsi, les passages 46 sont adaptés pour permettre le passage des granules 13.

Chaque passage 46 s'ouvre aux voisinage d'un bord latéral 48 de la chambre 14.

Les passages 46 sont décalés d'une grille 18 à la suivante selon la direction d'élévation Z.

Par le terme « décalés », il est entendu que chaque passage 46 s'ouvre au voisinage d'un bord latéral 48 différent du bord latéral 48 au voisinage duquel s'ouvre le passage 46 défini par la grille 18 précédente ou la grille 18 suivante.

Autrement dit, chaque passage 46 s'ouvre en regard d'une grille 18, et non directement en regard d'un autre passage 46.

Les grilles 18 forment ainsi un ensemble de chicanes dans l'espace interne 22, entre l'entrée des granules 24 et la sortie des granules 26.

Par le terme « chicane », il est entendu un obstacle détournant le mouvement naturel d'un corps pour lui conférer un parcours sinueux.

Les grilles 18 sont adaptées pour conférer aux granules 13 dans la chambre 14 un parcours sinueux, et ainsi prolonger la distance parcourue par chaque granule 13 entre l'entrée des granules 24 et la sortie des granules 26.

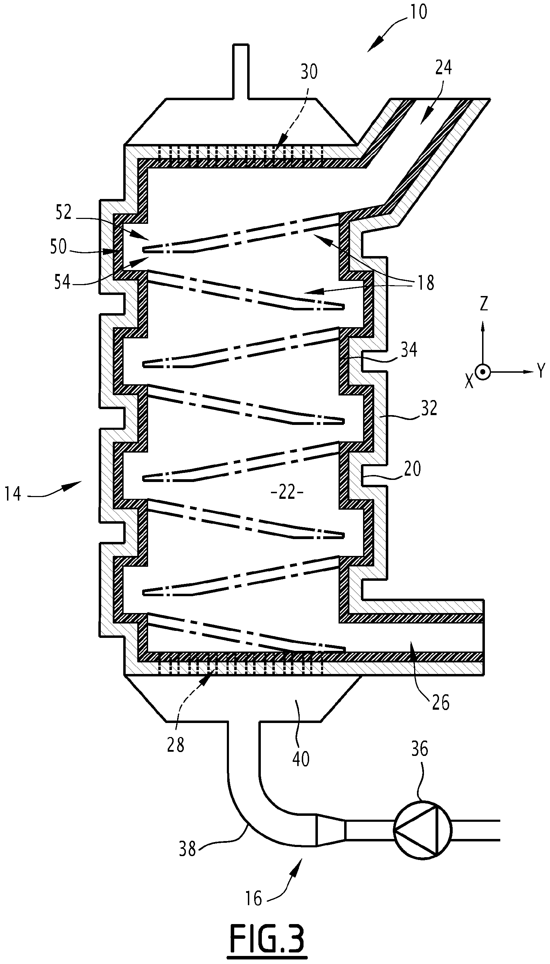

Selon un mode de réalisation représenté sur la figure 3, chaque grille 18 s'étend en travers d'une totalité de l'espace interne 22, d'un bord latéral 48 à l'autre.

Les grilles 18 ne définissent alors pas de passages 46.

La chambre 14 comprend des conduits 50 traversant les parois 20.

Chaque conduit 50 est adapté pour permettre aux granules 13 de contourner une des grilles 18.

Chaque conduit 50 comprend une première embouchure 52 et une deuxième embouchure 54.

La première embouchure 52 et la deuxième embouchure 54 débouchent chacune à travers le même bord latéral 48 de la chambre 14.

La première embouchure 52 débouche au-dessus de la grille 18 contournée par le conduit 50, relativement à la direction d'élévation Z.

La deuxième embouchure 54 débouche en dessous de la grille 18 contournée par le conduit 50, relativement à la direction d'élévation Z.

Un procédé de chargement d'un mélange 12 de granules 13 de matériaux différents, mettant en oeuvre le dispositif 10 de chargement représenté sur les figures 1 et 2 va maintenant être décrit.

Le procédé comprend une étape de génération d'un flux d'air dans l'espace interne de la chambre, par le dispositif de soufflage.

Le procédé comprend une étape d'insertion des granules 13 dans la chambre à travers l'entrée des granules 24.

Le procédé comprend une étape de formation d'un lit fluidisé par les granules 13 dans la chambre 14, sous l'effet du flux d'air.

Au cours de l'étape de formation du lit fluidisé, les granules 13 parcourent la chambre 14 depuis l'entrée des granules 24 jusqu'à la sortie des granules 26.

Les granules 13 contournent les grilles 18 pendant leur parcours.

Simultanément, le procédé comprend une étape de chargement des granules 13 par triboélectricité. Les granules 13 s'entrechoquent et génèrent des charges de surface les uns sur les autres.

Le procédé comprend enfin une extraction des granules 13 hors de la chambre 14 à travers la sortie des granules 26.

Les granules 13 parcourent la chambre 14, depuis l'entrée des granules 24 jusqu'à la sortie des granules 26, en un temps de séjour.

Une valeur moyenne du temps de séjour des granules 13 est supérieure ou égale à trente secondes, notamment supérieure ou égale à une minute, avantageusement supérieure ou égale à deux minutes.

Le dispositif 10 de chargement et les procédé décrits permettent de charger le mélange 12 de granule 13 de manière efficace, avec un approvisionnement continu en granules 13 et un temps de séjour important.

Cela permet d'obtenir une charge surfacique augmentée sur les granules 13 sortant du dispositif 10, afin d'améliorer la séparation.

Le dispositif 10 permet de plus de maintenir un rendement important grâce à l'approvisionnement en flux continu.

Enfin, le dispositif 10 conserve une surface au sol réduite et ne nécessite pas de soufflante plus puissante qu'un dispositif de l'état de la technique.

## Revendications

1. Dispositif (10) de charge par triboélectricité d'un mélange (12) de granules (13) de matériaux différents, le dispositif (10) comprenant :
- une chambre (14) de chargement comprenant des parois (20) délimitant un espace interne (22), les parois (20) définissant une entrée des granules (24) et une sortie des granules (26), l'entrée des granules (24) et la sortie des granules (26) étant à l'écart l'une de l'autre par rapport à une direction d'élévation (Z), et
- un dispositif de soufflage (16) adapté pour générer dans l'espace interne (22) un flux d'air adapté pour permettre aux granules (13) dans la chambre (14) de former un lit fluidisé,
**caractérisé en ce que** le dispositif comprend une pluralité de grilles (18) disposées dans la chambre (14), les grilles (18) étant adaptées pour bloquer le passage des granules (13), les grilles formant un ensemble de chicanes dans l'espace interne (22) entre l'entrée des granules (24) et la sortie des granules (26).

2. Dispositif selon la revendication 1, dans lequel chaque grille (18) s'étend dans un plan d'étendue et présente une forme rectangulaire.

3. Dispositif selon la revendication 2, dans lequel le plan d'étendue de chaque grille (18) forme avec la direction d'élévation (Z) un angle d'inclinaison, une valeur de l'angle d'inclinaison étant comprise entre -20° et 20°.

4. Dispositif selon la revendication 3, dans lequel la valeur de l'angle d'inclinaison de chaque grille (18) est opposée à la valeur de l'angle d'inclinaison de chaque grille (18) voisine.

5. Dispositif selon l'une quelconque des revendications 1 à 4, dans lequel au moins un revêtement (34) des parois (20) de la chambre (14) est réalisé avec un matériau de revêtement, le matériau de revêtement étant adapté pour charger au moins deux des matériaux des granules (13) par effet triboélectrique.

6. Dispositif selon l'une quelconque des revendications 1 à 5, dans lequel chaque grille (18) définit un passage (46) dans l'espace interne (22), chaque passage (46) étant adapté pour permettre le passage des granules (13), chaque passage (46) s'ouvrant aux voisinage d'un bord latéral (48) de la chambre (14).

7. Dispositif selon l'une quelconque des revendications 1 à 5, dans lequel chaque grille (18) s'étend en travers d'une totalité de l'espace interne (22), la chambre (14) comprenant des conduits (50) traversant des parois (20), chaque conduit (50) étant adapté pour permettre aux granules (13) de contourner une des grilles (18).

8. Procédé de chargement par triboélectricité d'un mélange (12) de granules (13) de matériaux différents, le procédé mettant en oeuvre un dispositif (10) de charge d'un mélange (12) de granules (13) de matériaux différents, le dispositif (10) comprenant :
- une chambre (14) de chargement comprenant des parois (20) délimitant un espace interne (22), les parois (20) définissant une entrée des granules (24) et une sortie des granules (26), l'entrée des granules (24) et la sortie des granules (26) étant à l'écart l'une de l'autre relativement à une direction d'élévation (Z),
- un dispositif de soufflage (16) adapté pour générer dans l'espace interne (22) un flux d'air s'écoulant selon la direction d'élévation (Z), le flux d'air étant adapté pour permettre aux granules (13) dans la chambre (14) de former un lit fluidisé, et
- une pluralité de grilles (18) disposées dans la chambre (14), les grilles (18) étant adaptées pour bloquer le passage des granules (13), les grilles formant un ensemble de chicanes dans l'espace interne (22) entre l'entrée des granules (24) et la sortie des granules (26),
le procédé comprenant des étapes suivantes :
- génération du flux d'air dans l'espace interne (22) par le dispositif de soufflage (16),
- insertion des granules (13) dans la chambre (14) à travers l'entrée des granules (24),
- parcours de la chambre (14) par les granules (13), pour obtenir des granules (13) chargés, et
- extraction des granules (13) chargés hors de la chambre (14) à travers la sortie des granules (26).

9. Procédé selon la revendication 8, dans lequel, lors de l'étape de parcours, un temps de séjour moyen des granules (13) dans la chambre (14) est supérieur ou égal à trente secondes, notamment supérieur ou égal à une minute, avantageusement supérieur ou égal à deux minutes.

10. Utilisation d'un dispositif (10) de charge par triboélectricité d'un mélange (12) de granules (13) de matériaux différents pour charger les granules (13), afin de séparer de granules (13) en fonction des matériaux des granules (13),
le dispositif (10) comprenant :
- une chambre (14) de chargement comprenant des parois (20) délimitant un espace interne (22), les parois (20) définissant une entrée des granules (24) et une sortie des granules (26), l'entrée des granules (24) et la sortie des granules (26) étant à l'écart l'une de l'autre relativement à une direction d'élévation (Z),
- un dispositif de soufflage (16) adapté pour générer dans l'espace interne (22) un flux d'air s'écoulant selon la direction d'élévation (Z), le flux d'air étant adapté pour permettre aux granules (13) dans la chambre (14) de former un lit fluidisé, et
- une pluralité de grilles (18) disposées dans la chambre (14), les grilles (18) étant adaptées pour bloquer le passage des granules (13), les grilles formant un ensemble de chicanes dans l'espace interne (22) entre l'entrée des granules (24) et la sortie des granules (26),
les matériaux des granules (13) étant choisis dans le groupe constitué du polypropylène, du polystyrène, du polyamide, de l'acrylonitrile butadiène styrène et du polyéthylène.

## Patentansprüche

1. Vorrichtung (10) zum triboelektrischen Aufladen eines Gemischs (12) von Granulat (13) aus unterschiedlichen Materialien, die Vorrichtung (10) umfassend:
- eine Ladekammer (14), umfassend Wände (20), die einen Innenraum (22) begrenzen, wobei die Wände (20) einen Granulateinlass (24) und einen Granulatauslass (26) definieren, wobei der Granulateinlass (24) und der Granulatauslass (26) in Bezug auf eine Erhebungsrichtung (Z) voneinander beabstandet sind, und
- eine Gebläsevorrichtung (16), die angepasst ist, um in dem Innenraum (22) einen Luftstrom zu erzeugen, der angepasst ist, um zu ermöglichen, dass das Granulat (13) in der Kammer (14) ein Wirbelbett bildet,
**dadurch gekennzeichnet, dass** die Vorrichtung eine Vielzahl von Gittern (18) umfasst, die in der Kammer (14) angeordnet sind, wobei die Gitter (18) angepasst sind, um den Durchgang des Granulats (13) zu blockieren, wobei die Gitter eine Anordnung von Schikanen in dem Innenraum (22) zwischen dem Granulateinlass (24) und dem Granulatauslass (26) bilden.

2. Vorrichtung nach Anspruch 1, wobei sich jedes Gitter (18) in einer Erstreckungsebene erstreckt und eine rechteckige Form aufweist.

3. Vorrichtung nach Anspruch 2, wobei die Erstreckungsebene von jedem Gitter (18) mit der Erhebungsrichtung (Z) einen Neigungswinkel bildet, wobei ein Wert des Neigungswinkels zwischen -20° und 20° liegt.

4. Vorrichtung nach Anspruch 3, wobei der Wert des Neigungswinkels von jedem Gitter (18) dem Wert des Neigungswinkels von jedem benachbarten Gitter (18) entgegengesetzt ist.

5. Vorrichtung nach einem der Ansprüche 1 bis 4, wobei mindestens eine Beschichtung (34) der Wände (20) der Kammer (14) aus einem Beschichtungsmaterial realisiert ist, wobei das Beschichtungsmaterial angepasst ist, um mindestens zwei der Materialien des Granulats (13) durch triboelektrischen Effekt aufzuladen.

6. Vorrichtung nach einem der Ansprüche 1 bis 5, wobei jedes Gitter (18) einen Durchgang (46) in dem Innenraum (22) definiert, wobei jeder Durchgang (46) angepasst ist, um den Durchgang von Granulat (13) zu ermöglichen, wobei sich jeder Durchgang (46) in der Nähe eines seitlichen Rands (48) der Kammer (14) öffnet.

7. Vorrichtung nach einem der Ansprüche 1 bis 5, wobei sich jedes Gitter (18) quer über den gesamten Innenraum (22) erstreckt, die Kammer (14) umfassend Kanäle (50), die die Wände (20) durchqueren, wobei jeder Kanal (50) angepasst ist, um zu ermöglichen, dass das Granulat (13) eines der Gitter (18) umgeht.

8. Verfahren zum triboelektrischen Laden eines Gemischs (12) von Granulat (13) aus unterschiedlichen Materialien, wobei das Verfahren eine Vorrichtung (10) zum Laden eines Gemischs (12) von Granulat (13) aus unterschiedlichen Materialien einsetzt, die Vorrichtung (10) umfassend:
- eine Ladekammer (14), umfassend Wände (20), die einen Innenraum (22) begrenzen, wobei die Wände (20) einen Granulateinlass (24) und einen Granulatauslass (26) definieren, wobei der Granulateinlass (24) und der Granulatauslass (26) in Bezug auf eine Erhebungsrichtung (Z) voneinander beabstandet sind,
- eine Gebläsevorrichtung (16), die angepasst ist, um in dem Innenraum (22) einen Luftstrom zu erzeugen, der entlang der Erhebungsrichtung (Z) strömt, wobei der Luftstrom angepasst ist, um zu ermöglichen, dass das Granulat (13) in der Kammer (14) ein Wirbelbett bildet, und
- eine Vielzahl von Gittern (18), die in der Kammer (14) angeordnet sind, wobei die Gitter (18) angepasst sind, um den Durchgang des Granulats (13) zu blockieren, wobei die Gitter eine Anordnung von Schikanen in dem Innenraum (22) zwischen dem Granulateinlass (24) und dem Granulatauslass (26) bilden,
das Verfahren umfassend die folgenden Schritte:
- Erzeugen des Luftstroms in den Innenraum (22) durch die Gebläsevorrichtung (16),
- Einführen des Granulats (13) in die Kammer (14) durch den Granulateinlass (24),
- Durchlaufen der Kammer (14) durch das Granulat (13), um geladenes Granulat (13) zu erlangen, und
- Extrahieren des geladenen Granulats (13) aus der Kammer (14) durch den Granulatauslass (26).

9. Verfahren nach Anspruch 8, wobei bei dem Durchlaufschritt eine durchschnittliche Verweilzeit des Granulats (13) in der Kammer (14) größer als oder gleich wie dreißig Sekunden, insbesondere größer als oder gleich wie eine Minute, vorteilhafterweise größer als oder gleich wie zwei Minuten, ist.

10. Verwendung einer Vorrichtung (10) zum triboelektrischen Laden eines Gemischs (12) von Granulat (13) aus unterschiedlichen Materialien, um das Granulat (13) aufzuladen, um Granulat (13) entsprechend den Materialien des Granulats (13) zu trennen,
die Vorrichtung (10) umfassend:
- eine Ladekammer (14), umfassend Wände (20), die einen Innenraum (22) begrenzen, wobei die Wände (20) einen Granulateinlass (24) und einen Granulatauslass (26) definieren, wobei der Granulateinlass (24) und der Granulatauslass (26) in Bezug auf eine Erhebungsrichtung (Z) voneinander beabstandet sind,
- eine Gebläsevorrichtung (16), die angepasst ist, um in dem Innenraum (22) einen Luftstrom zu erzeugen, der entlang der Erhebungsrichtung (Z) strömt, wobei der Luftstrom angepasst ist, um zu ermöglichen, dass das Granulat (13) in der Kammer (14) ein Wirbelbett bildet, und
- eine Vielzahl von Gittern (18), die in der Kammer (14) angeordnet sind, wobei die Gitter (18) angepasst sind, um den Durchgang des Granulats (13) zu blockieren, wobei die Gitter eine Anordnung von Schikanen in dem Innenraum (22) zwischen dem Granulateinlass (24) und dem Granulatauslass (26) bilden,
wobei die Materialien des Granulats (13) ausgewählt sind aus der Gruppe, bestehend aus Polypropylen, Polystyrol, Polyamid, Acrylnitril-Butadien-Styrol und Polyethylen.

## Claims

1. A device (10) for triboelectric charging of a mixture (12) of granules of different materials, the device (10) comprising:
- a charging chamber (14) comprising walls (20) delimiting an inner space (22), the walls (20) defining a granule inlet (24) and a granule outlet (26), the granule inlet (24) and the granule outlet (26) being separated from one another relative to an elevation direction (Z), and
- a blowing device (16) suitable for generating, in the inner space (22), an air flow suitable for allowing the granules (13) in the chamber (14) to form a fluidized bed,
**characterized in that** the device comprises a plurality of grids (18) positioned in the chamber (14), the grids (18) being suitable for blocking the passage of the granules (13), the grids forming a set of baffles in the inner space (22) between the granule inlet (24) and the granule outlet (26).

2. The device according to claim 1, wherein each grid (18) extends in a plane of extension and has a rectangular shape.

3. The device according to claim 2, wherein the plane of extension of each grid (18) forms an incline angle with the elevation direction (Z), a value of the incline angle being inclusively between -20° and 20°.

4. The device according to claim 3, wherein the value of the incline angle of each grid (18) is opposite the value of the incline angle of each adjacent grid (18).

5. The device according to any one of the claims 1 to 4, wherein at least one covering (34) of the walls (20) of the chamber (14) is made with a covering material, the covering material being suitable for charging at least two of the materials of the granules (13) by triboelectric effect.

6. The device according to any one of the claims 1 to 5, wherein each grid (18) defines a passage (46) in the inner space (22), each passage (46) being suitable for allowing the passage of the granules (13), each passage (46) opening near a lateral edge (48) of the chamber (14).

7. The device according to any one of the claims 1 to 5, wherein each grid (18) extends through the entire inner space (22), the chamber (14) comprising ducts (50) passing through the walls (20), each duct (50) being suitable for allowing the granules (13) to bypass one of the grids (18).

8. A method for triboelectric charging of a mixture (12) of granules (13) of different materials, the method implementing a device (10) for charging a mixture (12) of granules (13) of different materials, the device (10) comprising:
- a charging chamber (14) comprising walls (20) delimiting an inner space (22), the walls (20) defining a granule inlet (24) and a granule outlet (26), the granule inlet (24) and the granule outlet (26) being separated from one another relative to an elevation direction (Z),
- a blowing device (16) suitable for generating, in the inner space (22), an air flow flowing in the elevation direction (Z), the air flow being suitable for allowing the granules (13) in the chamber (14) to form a fluidized bed, and
- a plurality of grids (18) positioned in the chamber (14), the grids (18) being suitable for blocking the passage of the granules (13), the grids (18) forming a set of baffles in the inner space (22) between the granule inlet (24) and the granule outlet (26),
the method comprising the following steps:
- generating the air flow in the inner space (22) via the blowing device (16),
- inserting granules (13) in the chamber (14) through the granule inlet (24),
- having the granules (13) travel through the chamber (14), in order to obtain charged granules (13), and
- extracting the charged granules (13) from the chamber (14) through the granule outlet (26).

9. The method according to claim 8, wherein, during the travel step, an average residence time of the granules (13) in the chamber (14) is greater than or equal to thirty seconds, in particular greater than or equal to one minute, advantageously greater than or equal to two minutes.

10. A use of a device (10) for triboelectric charging of a mixture (12) of granules (13) of different materials in order to charge the granules (13), so as to separate granules (13) based on the materials of the granules (13),
the device (10) comprising:
- a charging chamber (14) comprising walls (20) delimiting an inner space (22), the walls (20) defining a granule inlet (24) and a granule outlet (26), the granule inlet (24) and the granule outlet (26) being separated from one another relative to an elevation direction (Z),
- a blowing device (16) suitable for generating, in the inner space (22), an air flow flowing in the elevation direction (Z), the air flow being suitable for allowing the granules (13) in the chamber to form a fluidized bed, and
- a plurality of grids (18) positioned in the chamber (14), the grids (16) being suitable for blocking the passage of the granules (13), the grids (18) forming a set of baffles in the inner space (22) between the granule inlet (24) and the granule outlet (26),
the materials of the granules (13) being chosen from the group consisting of polypropylene, polystyrene, polyamide, acrylonitrile butadiene styrene and polyethylene.
